# DEMANDE DE BREVET EUROPEEN

(11) **EP 0 979 756 A1**
(43) Date de publication de la demande: **16.02.2000**
(21) Numéro de dépôt: 99420172.1
(22) Date de dépôt: 23.07.1999
(51) Int. Cl.: B60Q 1/52, B60Q 7/00

(54) **Dispositif de signalisation améliorant la visibilité par mauvais temps pour les véhicules et les postes de signalisation fixes**

(30) Priorité: 12.08.1998 FR 9810365
(71) Demandeur: Plasse, Gabriel, 30400 Villeneuve Lez, Avignon (FR)
(72) Inventeur: Plasse, Gabriel, 30400 Villeneuve Lez, Avignon (FR)

(57) **Abrégé**

Dispositif de signalisation améliorant la visibilité par temps de brouillard ou forte pluie ou neige en décrivant un balayage lumineux de couleurs verte ou jaune, d'angle compris entre 100 et 180° et de vitesse circonférentielle de balayage de 0,3 à 3 m/s et pouvant être installé sur des véhicules ou sur des postes de signalisation fixes.

Ce dispositif selon l'invention est particulièrement destiné à équiper les signalétiques des panneaux de chantier mobiles ou immobiles ; II peut également être employé sur tous les véhicules routiers et en particulier les véhicules professionnels et industriels, les poids lourds, les autobus, les véhicules de chantier ;

## Description

La présente invention concerne un dispositif qui améliore et augmente considérablement la visibilité d'un objet par temps de brouillard ou forte pluie ou neige.

Ce dispositif peut équiper tous les véhicules routiers et en particulier les véhicules professionnels et industriels, les poids lourds, les autobus, les véhicules de chantier ; il peut également être employé dans les signalétiques des panneaux mobiles ou immobiles.

L'objectif poursuivi est d'améliorer la sécurité par mauvais temps par une signalisation visible à des distances suffisantes compte tenu des vitesses admises par le code de la route.

Ce qui existe:
° Les véhicules actuels comportent à l'arrière des feux rouges ou orangés et de face des feux anti-brouillard de couleur jaune clair ; ces feux sont fixes et par temps de faible visibilité ne sont pas très bien perçus et fatiguent l'oeil par les halos qui les entourent.
° Des panneaux d'indication lumineux fixés sur des objets immobiles, ou des panneaux mobiles non lumineux, peu visibles.
° deux brevets spécifiques aux véhicules ont été déposés
   N° US 3 876 284 A ( APPLETON) 8 avril 1975: il conceme un système réfléchissant monté sur les essuie-glaces de véhicules et ayant pour objectif d'attirer l'attention des véhicules venant de face ou doublant ; ce système est peu utilisable car il suppose pour être efficace que ces véhicules éclairent le pare-brise du véhicule équipé des miroirs réfléchissants ... donc d'éblouir le conducteur.
   N° WO 90 13455 A ( PERRIGO) 15 novembre 1990 : il concerne un signal lumineux mobile pour véhicules et équipements en mouvements ou arrêtés. Il combine un mouvement et une luminosité variables des feux, permettant d'attirer l'attention des véhicules qui suivent, en cas de freinage brusque ou de collision. Ce système est spécifique aux véhicules et ne peut fonctionner de manière autonome; il peut-être utilisé par tous les temps mais est de peu d'efficacité en cas de visibilité fortement réduite
Il y a donc un besoin pour une signalisation et une protection plus efficaces des usagers des routes et des chantiers en cas de visibilité fortement réduite ( brouillard , neige..); l'invention vise à satisfaire ce besoin.

### DESCRIPTION:

L'invention est basée sur l'étude de la courbe des spectres lumineux, l'échelle des longueurs d'ondes des radiations de la lumières visible et le choix des couleurs les plus visibles par l'oeil humain ; elle est basée aussi sur l'observation qu'une luminance en mouvement circulaire est plus facilement observée qu'une luminance fixe ou à déplacement horizontal, et qu'il existe une relation entre la vitesse de déplacement et la facilité de perception par l'oeil humain.

La solution est apportée par un appareil à commande électromécanique ou électronique, protégé par un boîtier et permettant un mouvement d'oscillation d'une luminance verte ou jaune suivant un angle pouvant varier de 0 à 180°, et une vitesse circonférentielle pouvant varier de 0,3 à 3m/s (l'angle et la vitesse pratiques étant fonction de la taille de l'appareil à visualiser).

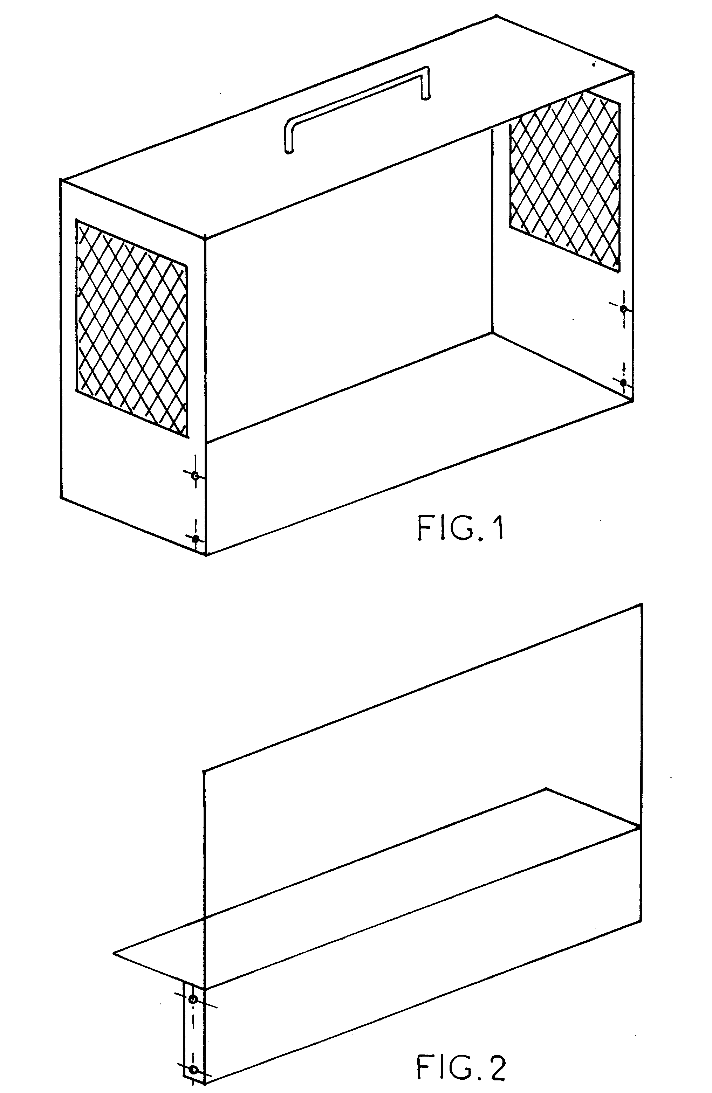

Le mécanisme est contenu dans un boîtier métallique ou plastique devant comporter des grilles d'aération et pouvant être équipé de plots anti-vibratoire pour la fixation sur les véhicules ou d'une poignée pour permettre la mise en place provisoire sur des signalisations de chantiers (fig 1 et fig 2).

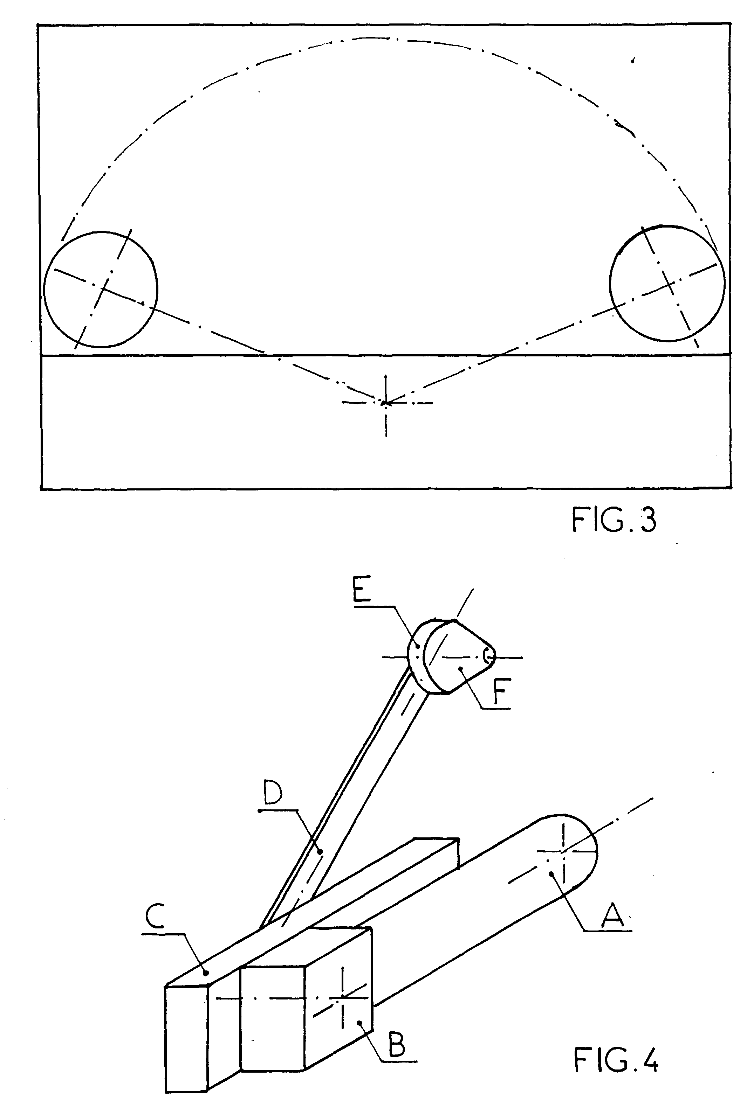

Le prototype est à commande électromécanique et composé d'un moteur de 12 volts (pièce A, fig. 4), accouplé à un moto-réducteur (B, fig.4), lui même entraînant un système de biellettes (C, fig. 4) créant le mouvement oscillant de balayage (fig.3) Un bras en aluminium (pièce D, fig. 4) est monté sur l'axe de sortie de l'ensemble précédent, et supporte à son extrémité le feu de signalisation ; ce dernier est composé d'une embase comprenant la douille de fixation (E, fig. 4), une ampoule de 21 watts et d'un cabochon en verre ou en plastique de couleur jaune ou verte (F, fig.1); des trous d'aération judicieusement placés permettent une ventilation efficace et limitent l'échauffement de l'ampoule. Enfin une sécurité permet d'arrêter le mouvement du bras oscillant en cas de casse de la façade de protection.

Dans le cas d'un système à commande électronique on peut envisager un boîtier comportant une alimentation électrique 12 volts et une série d'ampoules disposées en arc de cercle suivant l'angle et les dimensions optima avec une commande éclairant successivement chacune des ampoules afin de donner l'impression d'oscillation recherchée.

Pour le prototype qui a été conçu pour des engins de travaux publics, le bras oscillant (D, fig. 4) a un rayon de 240 mm, l'angle d'oscillation optimum a une valeur de 135 °et une vitesse circonférentielle de 0,87 m/s.

Cet angle et cette vitesse ont été choisis au cours d'essais de mise au point dans des conditions de visibilité réduites à 10 m ; dans ces conditions nous avons constaté :
- que la lumière rouge n'était visible qu'à 60 m en oscillation, et n'était décelable en position fixe qu'à partir de 40 m,
- que dans les mêmes conditions les lumières oscillantes vertes ou jaune étaient visibles à plus de 100 m.
- enfin que l'angle et la vitesse de balayage sont des paramètres importants pour éviter l'éblouissement et la vision éloignée.

## Revendications

1. Dispositif de signalisation améliorant la visibilité par temps de brouillard ou forte pluie ou neige caractérisé en ce qu'il est modulable fixe ou portable. et en ce qu'il peut être installé sur des véhicules ou sur des postes de signalisation fixes.

2. Dispositif selon la revendication 1 caractérisé en ce qu'il décrit un balayage lumineux de couleur, d'angle et de vitesse caractéristiques fonctions de la dimension de l'équipement à équiper

3. Dispositif selon la revendication 1 caractérisé par un boîtier de protection comportant des plots anti-vibratoires pour pouvoir être fixé sur un véhicule ou une poignée de transport pour être utilisé en provisoire lors de signalisation de chantiers et contenant un mécanisme permettant de décrire un arc lumineux.

4. Dispositif selon la revendication 1 caractérisé en ce qu'il comporte un système électromécanique ou électronique permettant de décrire un arc de cercle lumineux de couleur verte ou jaune avec un angle compris entre 100 et 180° et une vitesse de balayage circonférentielle de 0,3 à 3 m/s.
